# EUROPEAN PATENT APPLICATION

(11) **EP 2 518 663 A2**
(43) Date of publication of application: **31.10.2012**
(21) Application number: 12165121.0
(22) Date of filing: 23.04.2012
(51) Int. Cl.: G06K 9/00, G06K 9/62, G06K 9/20

(54) **Object recognition method and recognition apparatus**

(30) Priority: 26.04.2011 JP 2011098347
(71) Applicant: Hitachi Information & Communication, Kanagawa 244-8502 (JP)
(72) Inventor: Kitaguchi, Takahiro, Ashigarakami-gun, Kanagawa 259-0157 (JP); Suzuki, Kunihiko, Ashigarakami-gun, Kanagawa 259-0157 (JP); Uejima, Toshiaki, Ashigarakami-gun, Kanagawa 259-0157 (JP)
(74) Representative: Jansen, Cornelis Marinus

(57) **Abstract**

A target fish-eye image (100) for object recognition is split (120) into regions in accordance with the direction of distortion of the target fish-eye image (100). An object recognition portion (130) performs object recognition by using databases (140) prepared in accordance with the regions respectively. The same process is applied to a plurality of target fish-eye images (110) created by rotation of the target fish-eye image (100). A detected coordinate transformation portion (150) restores the obtained position of an object into the original position by inverse rotation, and outputs a thus obtained result as a detection result. Accordingly, detection accuracy in object recognition can be improved, and the quality of data in databases can be reduced. Rotated object images required for database creation are used for creation of databases for object recognition for the fish-eye image. Thus, it is possible to directly use a distorted fish-eye image for object recognition without projective conversion or image conversion based on corrective operation to the fish-eye image.

## Description

### BACKGROUND OF THE INVENTION

### 1. Field of the Invention

The present invention relates to an object recognition method and recognition apparatus. Particularly, it relates to an object recognition method and recognition apparatus for recognizing a human figure-containing object in an image taken with a fish-eye lens.

### 2. Description of the Related Art

A fish-eye lens has a merit in that the fish-eye lens has a wide visual field angle. At the same time, the fish-eye lens has a demerit in that a taken image contains a large distortion as the position of the image goes outward from its center. For this reason, a related-art object recognition method used for an undistorted or less distorted plane image cannot be used directly as a method for recognizing an object in an image taken with a fish-eye lens.

A technique of converting a distorted image taken with a fish-eye lens into a distortion-corrected image is generally known so that the related-art object recognition method used for a plane image can be used for recognizing an object in an image taken with a fish-eye lens. This technique is intended to be applied to a system or the like.

In the related-art object recognition used for a plane image, there is a contrivance in order to obtain rapid and accurate recognition.

As the related art concerned with a taken image conversion method such as conversion of a distorted image into an undistorted image, for example, there are known techniques described in JP-A-2004-227470, JP-A-2010-62790, JP-A-2010-67172, etc. That is, the technique described in JP-A-2004-227470 is a technique concerned with a method of converting a distorted image into an undistorted image in real time, and the technique described in JP-A-2010-62790 is a technique of extracting a desired arbitrary portion from a distorted circular image obtained by photographing using a fish-eye lens to thereby make it possible to convert the desired arbitrary portion of the distorted circular image into a less distorted plane regular image. In addition, the technique described in JP-A-2010-67172 is a technique concerned with a taken image conversion method which can obtain a wide visual field angle while a highly important center portion of a distorted fish-eye image is approximated to perspective projection and a peripheral portion of the fish-eye image is distorted moderately.

### SUMMARY OF THE INVENTION

As described above, in the technique of performing object recognition by using an image taken with a fish-eye lens, object recognition is performed after the image taken with the fish-eye lens is converted into a plane image. For this reason, a lot of hardware resources or software resources are consumed, and a considerable time is required for conversion of the image taken with the fish-eye lens into a plane image in comparison with the technique of performing object recognition by using a plane image without image conversion.

In the technical field requiring fast response such as operation support needing rapid object recognition, the aforementioned situation brings a hesitation in use of a fish-eye image required to be converted into a plane image.

It is generally known that, when a fish-eye image taken with a fish-eye lens at a large visual field angle, for example, of 180 degrees is converted into a plane image, the plane image is provided as an image having an infinite size. That is, a plane image into which a fish-eye image is converted has a large size compared with the original fish-eye image.

For this reason, when a plane image into which a fish-eye image is converted is used, a method of converting not the whole but a part of the fish-eye image is used generally. JP-A-2010-62790 has proposed measures against distortion and limitation of extractable places that cannot be completely solved by the method of extracting a part of a fish-eye image and converting the extracted part of the fish-eye image into a plane image. However, in the method of converting only a part of a fish-eye image, the advantage of a large visual field angle due to the fish-eye lens cannot be sufficiently made use of.

On the other hand, when object recognition is to be performed without conversion of a fish-eye image into a plane image, sufficient detection accuracy cannot be obtained even when the object recognition method using a plane image is used because the image of a detection-target object is distorted more largely as the image of the detection-target object is located in the outer side of the fish-eye image.

For this reason, when a fish-eye image is directly used for performing object recognition, it is conceived that distorted object data appearing on a fish-eye image are used as object data stored in a database to be used. However, in this case, a database covering all distortion patterns appearing on the fish-eye image must be created. Much labor is required for creation of the database compared with creation of a database based on use of a plane image.

In the aforementioned case, hardware resources required of the database for storing data having various distortion patterns become large compared with the case where distortion is not considered.

In the aforementioned case, direct use of the database containing image data having all distortion patterns for detection of an image of an object in an arbitrary region on the fish-eye image makes it impossible to detect the object with sufficient detection accuracy because the aforementioned database is a database containing data of objects having distortion not similar to distortion of a target region.

In consideration of the aforementioned technical problems inherent in the related art, an object of the invention is to provide an object recognition method and recognition apparatus designed to be able to recognize an object by using a fish-eye image directly without conversion of the fish-eye image into a plane image.

According to the invention, the foregoing object can be achieved by an object recognition method in an object recognition apparatus directly using a fish-eye image taken with a fish-eye camera for recognizing an object contained in the fish-eye image, wherein: the object recognition apparatus includes an object recognition portion which recognizes a detection-target object contained in the fish-eye image from the fish-eye image inputted from the fish-eye camera, and region-specific databases which are used for recognition of detection-target objects corresponding to split regions which are determined in accordance with a direction of distortion of the input fish-eye image so that the input fish-eye image is split into the split regions; and the object recognition portion detects and recognizes the detection-target object contained in the fish-eye image from the input fish-eye image by using the region-specific databases corresponding to the split regions of the input fish-eye image.

According to the invention, because the whole of a fish-eye image having a wide visual field angle can be used for recognizing an object without conversion of the fish-eye image into a plane image, rapid and accurate object recognition can be performed.

### BRIEF DESCRIPTION OF THE DRAWINGS

Figs. 1A to 1E are views for explaining a method of splitting a fish-eye image into regions in a recognition method based on a first basic thought of the invention;
Fig. 2 is a view for exampling a photogenic difference between figures of an object in respective regions in the case where a fish-eye image is split into eight regions with a center of the fish-eye image as a reference;
Figs. 3A to 3H are views for explaining a method of rotating a fish-eye image in a recognition method based on a second basic thought of the invention;
Figs. 4A to 4C are views showing an example of photographing from above perpendicularly to the ground surface and an example of a fish-eye image taken at that time;
Figs. 5A to 5L are views for explaining rotation of a target fish-eye image to make it possible to recognize a detection-target object contained in the fish-eye image;
Figs. 6A to 6M are views for explaining a method of creating image data for creation of databases from images for creation of one database;
Figs. 7A to 7K are views for explaining a method of creating image data for other region databases from image data for a certain region database;
Figs. 8A to 8H are views for explaining an object recognition method based on a third basic thought of the invention;
Fig. 9 is a block diagram showing the functional configuration of an object recognition apparatus according to an embodiment of the invention;
Fig. 10 is a block diagram showing the hardware configuration of an object recognition apparatus according to an embodiment of the invention;
Fig. 11 is a view showing an example of installation of a fish-eye camera in the object recognition apparatus shown in Fig. 10;
Figs. 12A to 12E are views (part 1) for explaining a method of creating databases used for recognizing an object in an image taken by a fish-eye camera; and
Figs. 13F to 13K are views (part 2) for explaining the method of creating databases used for recognizing an object in an image taken by the fish-eye camera.

### DETAILED DESRIPTION OF THE INVENTION

An object recognition method and recognition apparatus according to an embodiment of the invention will be described below in detail with reference to the drawings. The invention is to use the whole of a fish-eye image having a wide visual field angle to make it possible to recognize a human figure-containing object without conversion of the fish-eye image into a plane image.

Before description of specific embodiments of the invention, object recognition methods based on basic thoughts of the invention will be described first with reference to the drawings.

A method based on a first basic thought of the invention is a method in which: a fish-eye image is split into regions in accordance with a direction of distortion of the fish-eye image in order to take measures against distortion of the fish-eye image; databases corresponding to the split regions of the fish-eye image respectively are prepared; and the databases are used appropriately for detecting an object.

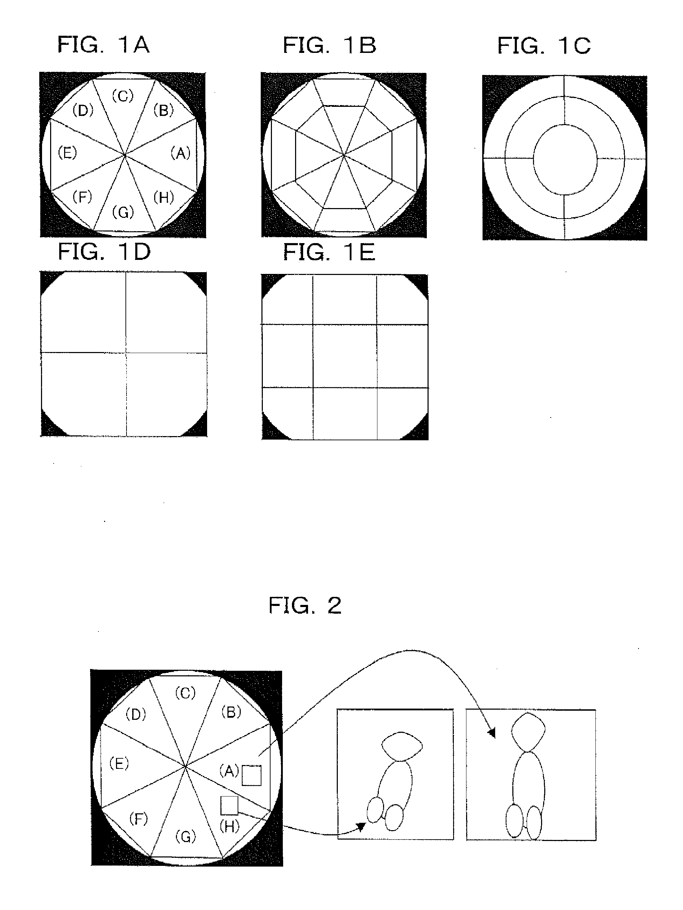

Figs. 1A to 1E are views for explaining a method of splitting a fish-eye image into regions in the recognition method based on the first basic thought of the invention. Fig. 2 is a view for explaining a photogenic difference between figures of an object in respective regions in the case where a fish-eye image is split into eight regions with a center of the fish-eye image as a reference.

As represented by some examples in Figs. 1A to 1E, the method of splitting a fish-eye image into regions in the recognition method based on the first basic thought of the invention is a method in which a fish-eye image is split into regions which are determined based on a distance from a center of the fish-eye image and a direction of distortion of the fish-eye image with the center as a reference. The example shown in Fig. 1A is an example in which a fish-eye image is split into eight regions (A) to (H) which are determined so as to be disposed radially with a center of the fish-eye image as a reference. The examples shown in Figs. 1B to 1E are examples in which a fish-eye image is split based on the same thought as described above.

Although description will be made below continuously using the splitting example shown in Fig. 1A, description about the splitting examples shown in Figs. 1B to 1E will be omitted because the examples shown in Figs. 1B to 1E are the same as that shown in Fig. 1A.

When a fish-eye image is split into eight regions with a center of the fish-eye image as a reference as shown in Fig. 1A, photogenicity of the figure of an object in each region varies according to the region as shown in Fig. 2. Fig. 2 shows the shapes of human figures which are located in the split regions (A) and (H) and which are an object having the same shape in a plane image. The shape of the human figure varies according to the regions because of distortion of the fish-eye image.

For this reason, even if the human figure in the region (H) can be detected when one database in which detection-target data are stored is used for detection of an object, there is a possibility that, when the human figure in the region (H) moves to the region (A), a human figure cannot be detected in a fish-eye image because photogenicity of the human figure in the fish-eye image varies due to difference in distortion.

Therefore, according to the first basic thought of the invention, eight databases corresponding to the split regions, that is, eight regions (A) to (H) are prepared respectively so that image comparison with the databases corresponding to the split regions is made (eight image comparison processes are made in the example shown in Fig. 1A) to detect an object. Accordingly, as long as an object has the same shape in a plane image, the object can be detected surely regardless of the region where the object is located. Incidentally, a method of creating databases corresponding to split regions in accordance with the split regions will be described later.

An object recognition method based on a second basic thought of the invention will be described next. The method based on the second basic thought of the invention is a method in which a fish-eye image taken in a sky direction or a direction perpendicular to the ground surface is rotated and then an object is recognized.

Generally, a fish-eye image has the property that the direction or intensity of distortion varies according to the position of an image where an object is located. As the image of the object is located farther away from the center of the image formed by light coming from an outer circumferential direction of the fish-eye lens, the distortion becomes more intensive. In comparison between images of two objects, the difference in distortion between the images of the two objects is limited to the direction of distortion if the distances from the centers of the images to the objects are substantially equal to each other. Because the direction of distortion is approximated to a direction of a line tangential to a circle with the center of the image as its center either at the time of photographing in the sky direction or at the time of photographing in a direction perpendicular to the ground surface, rotation of a fish-eye image on the center of the image permits a detection-target object to be detected and recognized at a certain rotation angle when object recognition is to be performed based on object detection by use of a database containing data created based on an object similar in shape to a detection-target object and substantially at the same distance from the center of the image as that of the detection-target object.

Accordingly, when a plurality of images obtained by rotation of a fish-eye image containing an image of an object as a detection-target object are used, the object can be recognized without the necessity of creating a database covering all distortion patterns on the fish-eye image. For practical operation of a system using an object recognition method using a fish-eye image, it can be conceived that use of not a database covering all distortion patterns but a database containing some distortion data is realistic. Use of the object recognition method based on the second basic thought of the invention for rotating a fish-eye image to thereby perform object recognition permits recognition accuracy to be improved easily compared with the method using a database covering all distortion patterns.

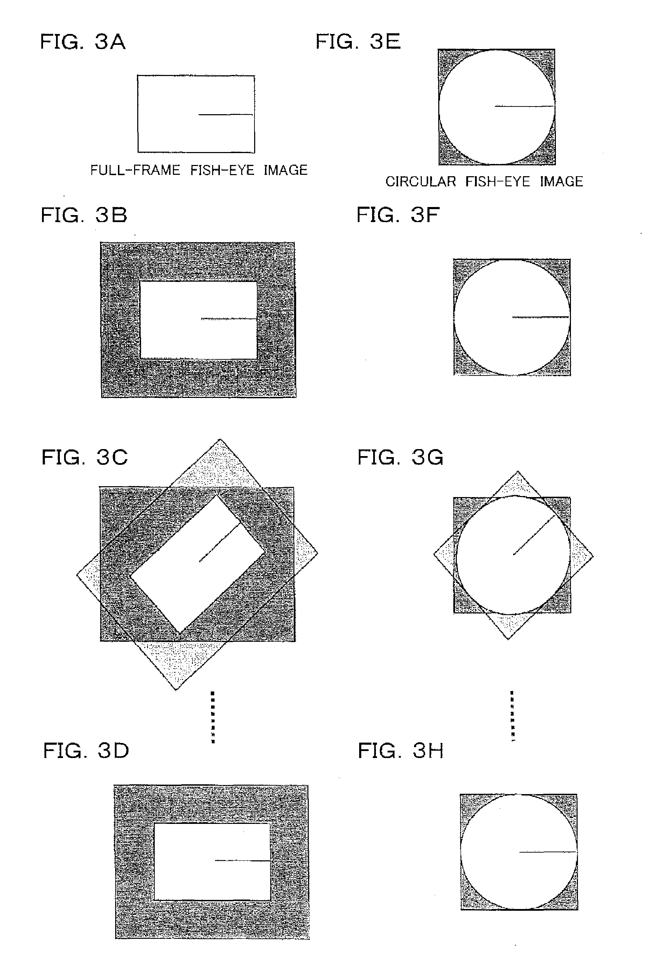

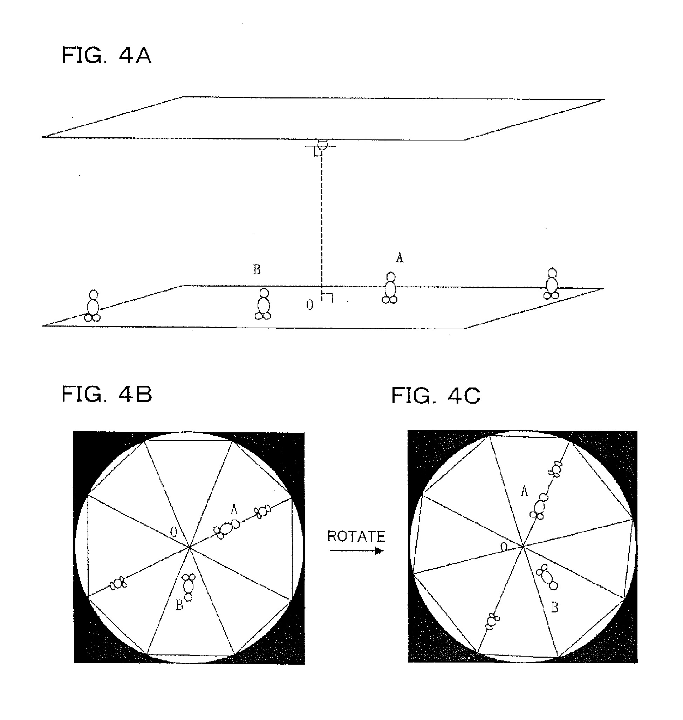

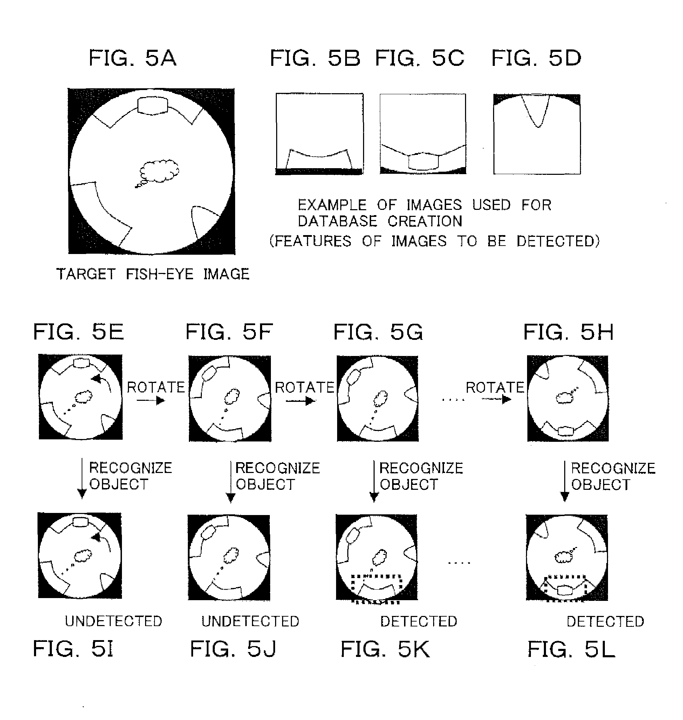

Figs. 3A to 3H are views for explaining a method of rotating a fish-eye image by the recognition method based on the second basic thought of the invention. Figs. 4A to 4C are views showing an example of photographing from above perpendicular to the ground surface and an example of a fish-eye image taken by the photographing at that time. Figs. 5A to 5L are views for explaining rotation of a target fish-eye image to make it possible to recognize a detection-target object contained in the fish-eye image.

Examples of rotation of a full-frame fish-eye image shown in Fig. 3A are shown in Figs. 3B to 3D. Examples of rotation of a circular fish-eye image shown in Fig. 3E are shown in Figs. 3F to 3H.

Because an image region subjected to an object recognition process has a shape long sideways, if a full-frame fish-eye image long sideways as shown in Fig. 3A is rotated as it is, a part of the image drawn in the left or right comes out of the processible region. Therefore, for rotation of a full-frame fish-eye image long sideways, the image is rotated after the processible image region is extended to prevent a part of the image from being lost by rotation. That is, as shown in Fig. 3B, the processible image region is extended to a gray region in which the taken fish-eye image is rotated. Accordingly, as shown in Figs. 3C and 3D, a part of the image can be prevented from coming out of the processible region even when the full-frame fish-eye image shown in Fig. 3A is rotated in any manner.

On the other hand, in the case of a circular fish-eye image as shown in Fig. 3E, the image can be rotated directly as shown in Figs. 3F to 3H because there is no part of the drawn image coming out of the processible region by rotation.

Fig. 4A shows an example of photographing from above perpendicular to the ground surface. For example, the example described here shows a state where an image of persons A and B, etc. staying on a floor surface is taken with a camera installed on a ceiling of a room. A circular fish-eye image taken in such a state is, for example, as shown in Fig. 4B. In the example shown in Fig. 4B, a surface of the taken circular fish-eye image and the ground surface (the floor surface of the room) are parallel to each other. When the circular fish-eye image is rotated counterclockwise on a center O of the image as shown in Fig. 4C, distortion of each person is determined by the distance from the center so that the distortion does not change according to the rotation. Accordingly, even when the image is rotated, object recognition can be performed.

Rotation of a fish-eye image to make it possible to recognize a detection-target object contained in the fish-eye image will be described below with reference to Figs. 5A to 5L.

In an example shown in Figs. 5A to 5L, a circular fish-eye image taken from the ground surface toward the sky direction as shown in Fig. 5A is set as a target fish-eye image in order to recognize a detection-target object contained in the fish-eye image. Assume that image data of images as shown in Figs. 5B to 5D are stored as detection-target object image data in a database. Incidentally, Figs. 5A to 5L show rotation permitting object recognition but do not use region-specific databases based on the first basic thought here.

For recognition of an object having image data as shown in Figs. 5B to 5D contained in a fish-eye image as shown in Fig. 5A from this image, object recognition is performed in such a manner that the fish-eye image as shown in Fig. 5A is compared and collated with the database having image data of images as shown in Figs. 5B to 5D while the fish-eye image as shown in Fig. 5A is rotated counterclockwise. That is, while a fish-eye image as shown in Fig. 5A is rotated counterclockwise little by little as shown in Figs. 5E to 5H, each rotated image is compared and collated with the database having image data as shown in Figs. 5B to 5D.

When the not-rotated image shown in Fig. 5E is compared and collated with the image data of the database shown in Figs. 5B to 5D, "undetected" is obtained as shown in Fig. 5I because an image of any object coincident (in terms of position and direction) with the image data of the database shown in Figs. 5B to 5D cannot be found from the image shown in Fig. 5E. When the image shown in Fig. 5F based on counterclockwise rotation of the image shown in Fig. 5E is compared and collated with the image data of the database shown in Figs. 5B to 5D, "undetected" is also obtained as shown in Fig. 5J because an image of any object coincident (in terms of position and direction) with the image data of the database shown in Figs. 5B to 5D cannot be found from the image shown in Fig. 5F, similarly to the aforementioned case.

When the image shown in Fig. 5G based on further counterclockwise rotation of the image shown in Fig. 5F is compared and collated with the image data of the database shown in Figs. 5B to 5D, "detected" is obtained as shown in Fig. 5K because an image of an object coincident (in terms of position and direction) with the image data of the database shown in Fig. 5B can be found from the image shown in Fig. 5G. When the image shown in Fig. 5H based on further counterclockwise rotation of the image shown in Fig. 5G is compared and collated with the image data of the database shown in Figs. 5B to 5D, "detected" is also obtained as shown in Fig. 5L because an image of an object coincident (in terms of position and direction) with the image data of the database shown in Fig. 5C can be found from the image shown in Fig. 5H, similarly to the aforementioned case.

As described above, in the recognition method based on the second basic thought of the invention, an object cannot be detected in a target fish-eye image but an object can be detected in an image obtained by rotation of the target fish-eye image at a certain angle when the database having the image data as shown in Figs. 5B to 5D is used. Accordingly, when an object is detected, the position of the object detected in the target fish-eye image can be calculated based on the detection result and the rotation angle of the target fish-eye image at that time.

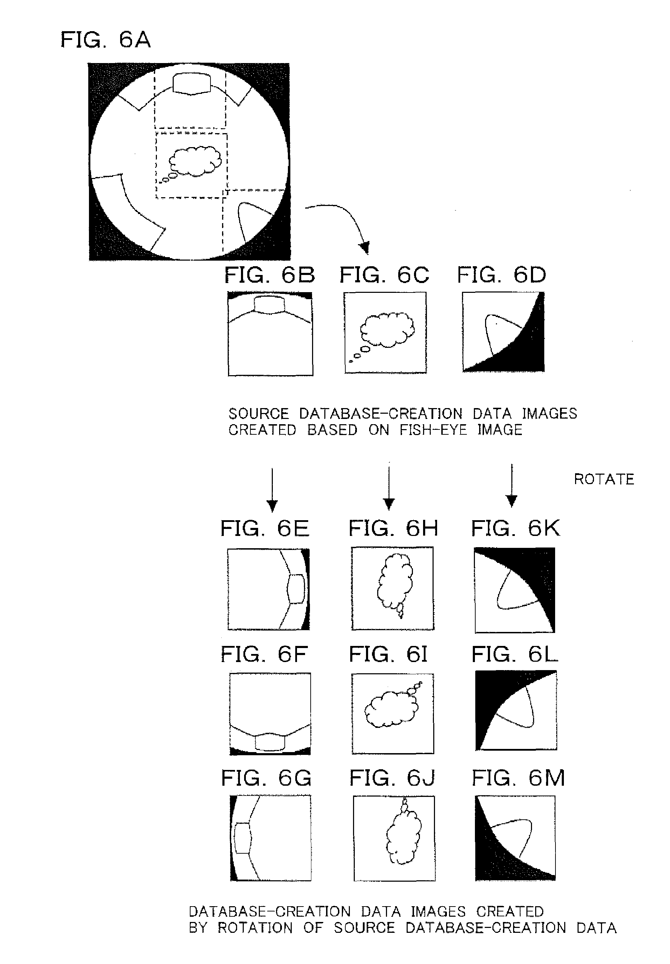

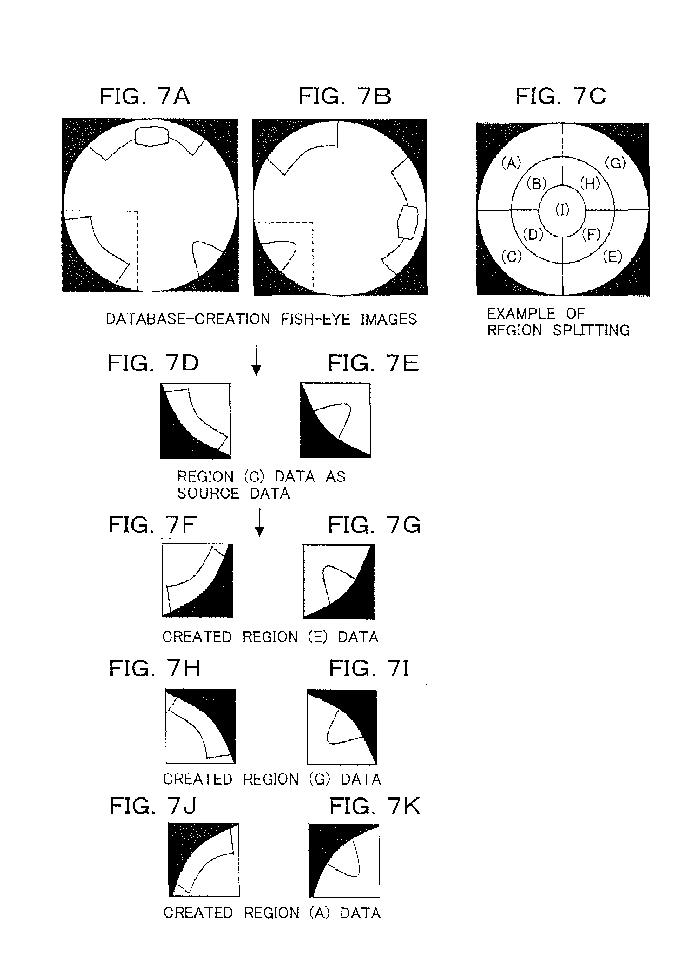

A method of creating databases corresponding to split regions respectively for the method based on the first basic thought will be described here. From grounds for the second basic thought "In comparison between images of two objects, the difference in distortion between the images of the two objects is limited to the direction of distortion if the distances from the centers of the images to the objects are substantially equal to each other.", it can be said that a plurality of database images can be created when an image for creating a database is rotated. Figs. 6A to 6M show a method of creating a database by using only the grounds for the second basic thought. Figs. 7A to 7K further show a method of creating respective region-specific databases for a method based on the first basic thought. These methods will be described below in detail.

Figs. 6A to 6M are views for explaining a method of creating a plurality of database-creating image data from one database-creating image.

Creation of a database used for recognition of an object for a fish-eye image taken from the ground surface in a direction perpendicular to the sky direction will be described with reference to Figs. 6A to 6M. In this case, as described above, the database can be created in such a manner that images as sources of image data to be stored in the database are rotated and the rotated images are added to the source image data in view of properties based on the position and direction of distortion on the fish-eye image. By using this method, the labor for collection of image data used for the database can be saved. In the example shown in Figs. 6A to 6M, a plurality of database-creating data are created from one data, and the database data created from the fish-eye image are rotated in 90 degree increments so that data used in the database are further created.

Fig. 6A shows an example of a fish-eye image which is used for creating a database and which is taken in the sky direction. For creating of the database, three images surrounded by dot lines in the fish-eye image shown in Fig. 6A are first extracted as images of detection-target objects, and image data of the object images are created as source image data as shown in Figs. 6B to 6D. Then, the fish-eye image data shown in Figs. 6B to 6D are rotated in 90 degree increments so that image data as shown in Figs. 6E to 6G are created from the image data shown in Fig. 6B and the source image data shown in Fig. 6B is added to these image data to thereby create one database, image data as shown in Figs. 6H to 6J are created from the image data shown in Fig. 6C and the source image data shown in Fig. 6C is added to these image data to thereby create one database, and further, image data as shown in Figs. 6K to 6M are created from the image data shown in Fig. 6D and the source image data shown in Fig. 6D is added to these image data to thereby create one database.

Figs. 7A to 7K are views for explaining a method of creating database image data for other regions from database image data for a certain region. The example described here is an example of the case where database image data for other regions are created from database image data for a certain region by rotation.

Assume that fish-eye images as shown in Figs. 7A and 7B are used as database-creating fish-eye images. Assume also that image splitting in this case is performed as shown in Fig. 7C.

For creation of databases, image data as shown in Figs. 7D and 7E are first created as database image data for a split region (C) from the fish-eye images shown in Figs. 7A and 7B, and these image data are used as source image data for creating image data to be used for databases for other split regions. Then, the database image data for the split region (C) shown in Figs. 7D and 7E are rotated counterclockwise 90 degrees to create image data as shown in Figs. 7F and 7G as database image data for the split region (E). The database image data for the split region (E) shown in Figs. 7F and 7G are further rotated counterclockwise 90 degrees to create image data as shown in Figs. 7H and 7I as database image data for the split region (G). The database image data for the split region (G) shown in Figs. 7H and 7I are further rotated counterclockwise 90 degrees to create image data as shown in Figs. 7J and 7K as database image data for the split region (A).

Incidentally, image data to be used for databases for split regions (D), (F), (H), (B) and (I) can be created in the same manner as described above. Creation of image data in this manner permits recognition accuracy to be equalized between regions.

An object recognition method based on a third basic thought of the invention will be described below. The method based on the third basic thought of the invention is a method using the aforementioned object recognition methods based on the first and second basic thoughts of the invention in combination. According to the object recognition method based on the third basic thought of the invention using the object recognition methods based on the first and second basic thoughts of the invention in combination, the number of times of rotation required for a target fish-eye image can be reduced so that the time required for object detection can be shortened and it is possible to solve the problem of a possibility that an object located near a region boundary will be undetected in object recognition at the time of region splitting.

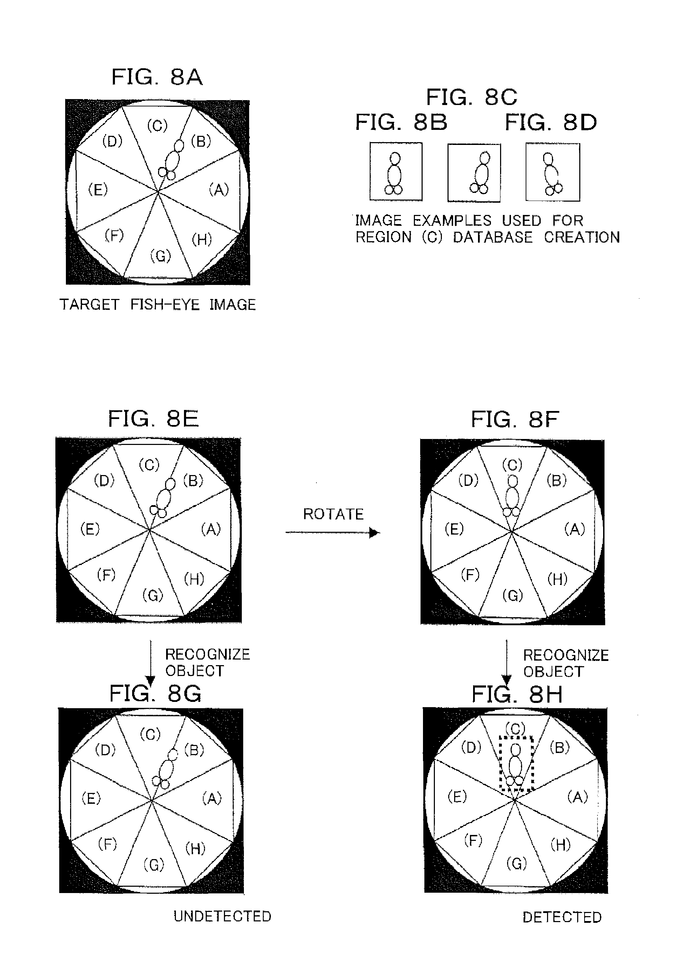

Figs. 8A to 8H are views for explaining an object recognition method based on the third basic thought of the invention. The method will be described below.

Fig. 8A shows the same target fish-eye image as shown in Fig. 1A in the object recognition method in which a fish-eye image is split into eight regions as described above with reference to Figs. 1A to 1E. Assume that an image of a person which is a target object to be detected is taken and located in a boundary between regions (B) and (C). A database having image data of images of a detection-target object shown in Figs. 8B to 8D which correspond to the case where the person as a target object is located in the center of the region (C), the case where the person is located in the boundary between the regions (B) and (C) and the case where the person is located in the boundary between the regions (C) and (D), respectively, is prepared as a database corresponding to the split region (C) for object detection.

Databases having distortions in accordance with the eight split regions respectively are prepared in the same manner as the aforementioned object recognition method based on the first basic thought of the invention. It is conceived that the database difference between respective split regions is only the direction of distortion when the aforementioned region-specific database creation method is used. Accordingly, in the case of the splitting method in Fig. 1A, the total angle required for rotation of the fish-eye image for all the regions in the object recognition method based on the third basic thought of the invention is sufficient by rotation up to 45 degrees as an inter-region angle because of 360÷8=45. This is because if rotation is performed up to 360 degrees in total when there is an object which can be detected in the center portion of the split region (C) in Figs. 8A-8H at a rotation angle of 15 degrees, detection is made duplicately eight times, i.e. in the center portion of the split region (C) in Figs. 8A-8H rotated 15 degrees, the center potion of the split region (D) in Figs. 8A-8H rotated 60 degrees, the center portion of the split region (E) in Figs. 8A-8H rotated 105 degrees, the center portion of the split region (F) in Figs. 8A-8H rotated 150 degrees, the center portion of the split region (G) in Figs. 8A-8H rotated 195 degrees, the center portion of the split region (H) in Figs. 8A-8H rotated 240 degrees, the center portion of the split region (A) in Figs. 8A-8H rotated 285 degrees and the center portion of the split region (B) in Figs. 8A-8H rotated 330 degrees.

For recognition of an object having image data as shown in Figs. 8B to 8D contained in the split region (C) of the fish-eye image as shown in Fig. 8A from the image, object recognition is performed in such a manner that the fish-eye image as shown in Fig. 8A is compared and collated with the database having image data of images as shown in Figs. 8B to 8D while the fish-eye image as shown in Fig. 8A is rotated little by little. In this case, as described above, image rotation may be rotation up to 45 degrees as an inter-region angle. Incidentally, rotation of the target fish-eye image means not rotation of regions but rotation of images.

When the not-rotated image shown in Fig. 8E is compared and collated with the database image data shown in Figs. 8B to 8D, an image of an object coincident (in terms of position and direction) with the database image data shown in Figs. 8B to 8D cannot be found from the image shown in Fig. 8E. Accordingly, "undetected" is obtained as shown in Fig. 8G. When an image of a person as a detection-target object is taken and located in a boundary between the regions (B) and (C), there is a high possibility that the target object will be undetectable even when databases corresponding to the regions (B) and (C) respectively are used.

However, as the image shown in Fig. 8E is rotated counterclockwise little by little, the image of the target object is located substantially in the center of a split region as shown in Fig. 8F. Accordingly, when the image of the target object is compared and collated with the database image data shown in Figs. 8B to 8D, the image of the target object can be detected as shown in Fig. 8H.

Although description has been made in the case where three image data shown in Figs. 8B to 8D are provided as database image data, more accurate object recognition can be made if image data in finer rotation positions in the split region (C) is prepared to create a database.

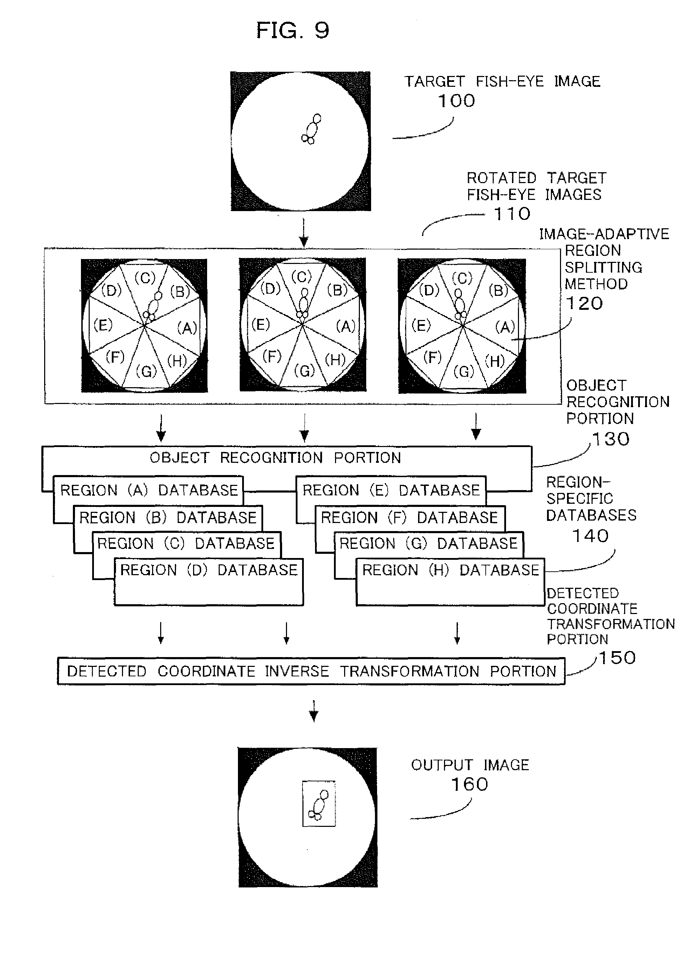

Fig. 9 is a block diagram showing the functional configuration of an object recognition apparatus according to an embodiment of the invention. The embodiment of the invention will be described here on the assumption that a circular fish-eye image taken with a fish-eye lens is split into eight regions and object recognition is made based on the aforementioned first and third basic thoughts.

The object recognition apparatus according to the embodiment of the invention as shown in Fig. 9 includes: a memory which stores a plurality of target fish-eye images 110 subjected to a rotating process; an object recognition portion 130; region-specific databases 140 corresponding to split regions (A) to (H) of the target fish-eye images respectively; and a detected coordinate inverse transformation portion 150 which transforms recognition coordinates of a recognized object into coordinates in the original target fish-eye image 100.

In the objection recognition apparatus according to the embodiment of the invention configured as described above, a fish-eye image 100 as a target for object recognition is first rotated to create a plurality of images. On this occasion, the target image is split into eight split regions with the center of the image as a reference. This is shown as an image-adaptive region splitting method 120 in Fig. 9. Although Fig. 9 shows the case where the rotated target fish-eye images 110 are three images because of 45÷15=3 based on use of a rotation angle of 15 degrees, the fish-eye image 100 may be rotated by an angle smaller than 15 degrees so that a plurality of images are created and stored in the memory. Incidentally, the point to be noted is that the rotated fish-eye images 110 mean not rotated positions of the split regions but rotated images.

For object recognition based on the aforementioned first basic thought by use of the aforementioned object recognition apparatus according to the embodiment of the invention, the object recognition portion 130 performs object detection and recognition in such a manner that image data of each of target fish-eye images stored in the memory to be subjected to object recognition is compared with image data of a detection-target object contained in each of region-specific databases 140 corresponding to the split regions (A) to (H) of fish-eye images by using the region-specific databases 140 for the corresponding split regions of the fish-eye images respectively. Then, the detected coordinate inverse transformation portion transforms information about the detected coordinate position of each rotated fish-eye image into the coordinate position of the object in the target fish-eye image 100, and outputs the coordinate position of the object.

Incidentally, in the simplest configuration in the case where the aforementioned object recognition apparatus according to the embodiment of the invention is used for performing object recognition based on the aforementioned first basic thought, the target fish-eye image 100 may be stored directly as a target fish-eye image 110 in the memory so that the object recognition portion 130 can perform object recognition for the one fish-eye image 110 by using the region-specific databases 140 for regions corresponding to the split regions of the fish-eye image in the same manner as described above.

In the case where the aforementioned object recognition apparatus according to the embodiment of the invention is used for performing object recognition based on the aforementioned third basic thought, a plurality of target fish-eye images 110 created by a rotating process of rotating a target fish-eye image at an angle smaller than 45 degrees in a range of 45 degrees may be stored in the memory so that the object recognition portion 130 can perform object recognition for the target fish-eye images 110 by using the region-specific databases 140 for regions corresponding to the split regions of each fish-eye image in the same manner as described above.

For example, when the angle smaller than 45 degrees for rotating the aforementioned target fish-eye image is set as 15 degrees, three fish-eye images 110 consisting of a 0-degree rotated image, 15-degree rotated image and a 30-degree rotated image because of 45÷15=3 may be created by a rotating process of rotating the target fish-eye image 100 at intervals of 15 degrees and stored in the memory so that the object recognition portion 130 can perform object recognition for the three target fish-eye images 110 by using the region-specific databases 140 for regions corresponding to the split regions of each fish-eye image in the same manner as described above.

Although the above description has shown the case where the target-fish image is rotated at intervals of 15 degrees, the rotation angle may be determined in accordance with the purpose of use. The detected coordinate inverse transformation portion outputs the coordinate position of the object recognized in the fish-eye image 100 by finding the location of the object on the target fish-eye image 100 based on 15-degree inverse rotation and 30-degree inverse rotation of the coordinates of the object detected in the 15-degree rotated image and the 30-degree rotated image.

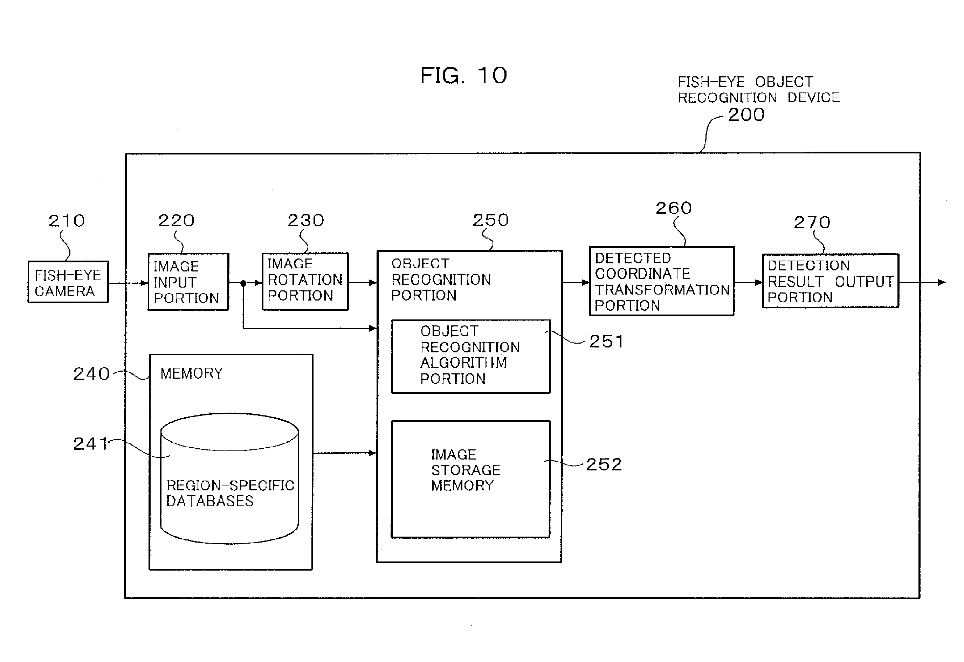

Fig. 10 is a block diagram showing the hardware configuration of an object recognition apparatus according to an embodiment of the invention.

The object recognition apparatus according to the embodiment of the invention includes: a fish-eye camera 210 as an input device for taking a fish-eye image; and a fish-eye object recognition device 200 which detects and recognizes a detection-target object contained in the fish-eye image taken with the fish-eye camera 210. The fish-eye object recognition device 200 includes: an image input portion 220 which is an interface for fetching a fish-eye image; an image rotation portion 230 which rotates the image fetched in the image input portion 220; a database storage memory 240; region-specific databases 241 stored in the database storage memory 240; an object recognition portion 250 which detects and recognizes a detection-target object contained in the fish-eye image; a detected coordinate transformation portion 260 which transforms the detected coordinates obtained by the object recognition portion 250 into the coordinates before rotation; and a detection result output portion 270 which outputs a detection result. The object recognition portion 250 includes: an object recognition algorithm portion 251 which performs object recognition; and an image storage memory 252 which stores a not-rotated image from the image input portion 220 and rotated images from the image rotation portion 230.

In the object recognition apparatus according to the embodiment of the invention configured as described above, data of a fish-eye image taken with the fish-eye camera 210 is inputted to the fish-eye object recognition device 200, fetched in the image input portion 220 and inputted to the image rotation portion 230 through the image input portion 220. The fish-eye image data inputted to the image rotation portion 230 is rotated by the image rotation portion 230 to thereby create a plurality of rotated image data. The plurality of image data and the not-rotated fish-eye image data from the image input portion are stored in the image storage memory 252 in the object recognition portion 250. The object recognition algorithm portion 251 in the object recognition portion 250 performs an object recognition process for the not-rotated image data and the plurality of rotated image data stored in the image storage memory 252 by using the region-specific databases 241 stored in the memory 240. A result of object detection by the object recognition algorithm portion 251 is inputted to the detected coordinate transformation portion 260. The detected coordinate transformation portion 260 transforms the detected coordinates of the object as the input detection result into the coordinates before rotation, and then outputs a result of the coordinate transformation to the outside of the fish-eye object recognition device 200 through the detection result output portion 270.

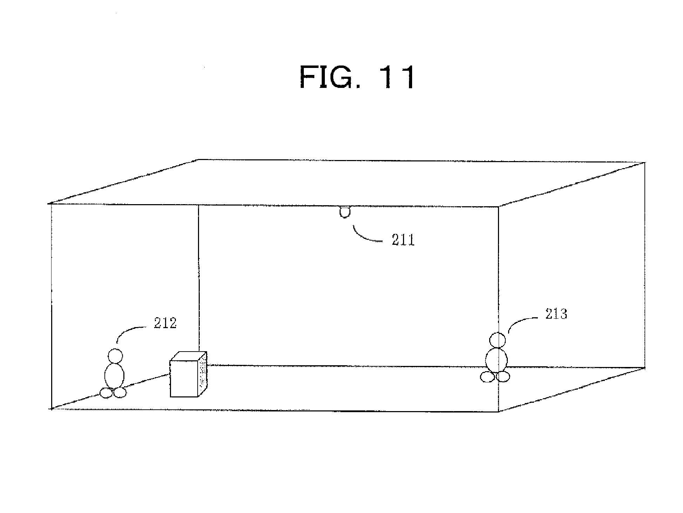

Fig. 11 is a view showing an example of installation of the fish-eye camera 210 in the object recognition apparatus shown in Fig. 10.

Although the position of installation of the fish-eye camera 210 in the object recognition apparatus shown in Fig. 10 is not particularly limited, the example shown in Fig. 11 shows the case where the fish-eye camera 210 is installed on the ceiling of a room so that a lens is directed to a direction perpendicular to the floor surface. There are two persons as recognition-target objects on the floor of the room. The object recognition apparatus shown in Fig. 11 recognizes the presence of the two persons from a fish-eye image taken with the fish-eye camera 210 installed as described above.

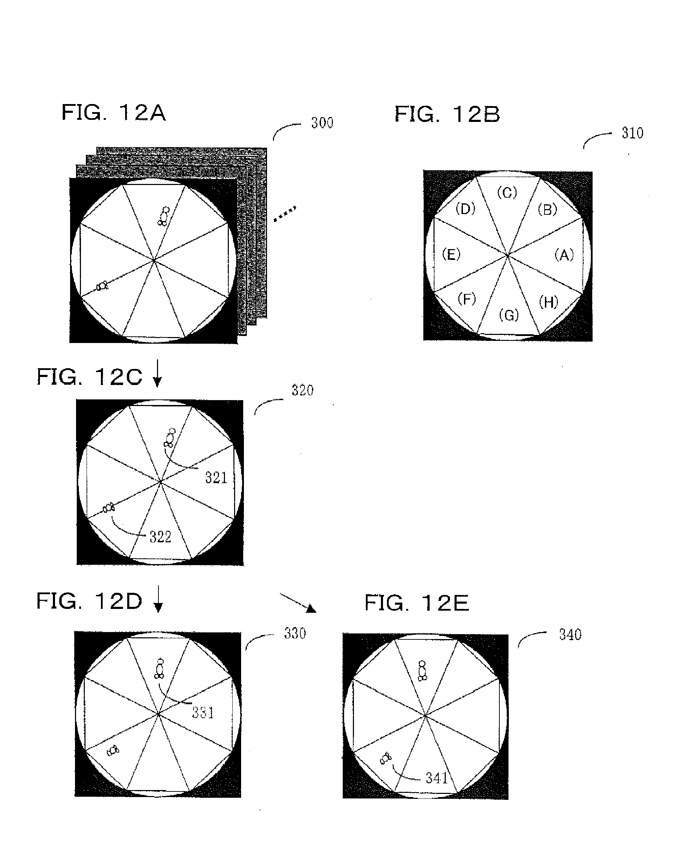

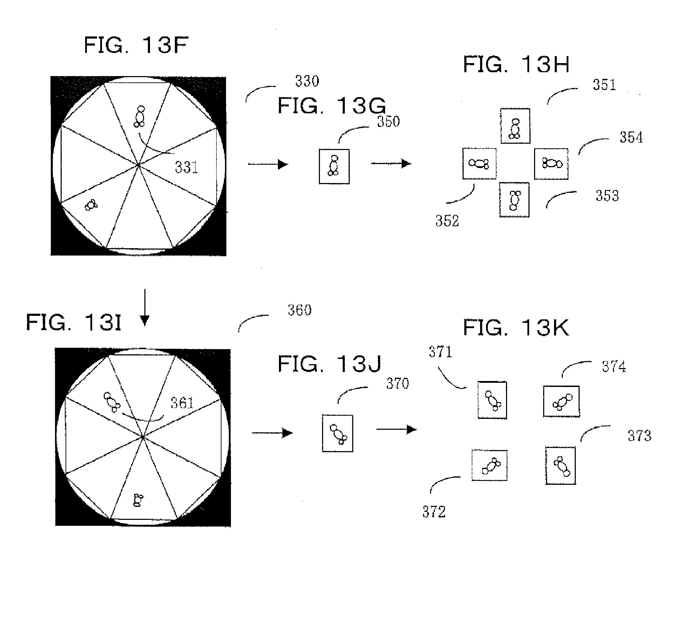

Figs. 12A to 12E and Figs. 13F to 13K are views for explaining a method of creating databases used for object recognition in an image taken with a fish-eye camera. Because Figs. 12A to 12E and Figs. 13F to 13K are a series of views for explaining a database creation method, these views will be described below continuously. The example described here is an example in which an image taken with a circular fish-eye lens is split into eight regions in outer circumferential directions from the center of the image in the same manner as described with reference to Fig. 1A to thereby create region-specific databases corresponding to the regions.

A plurality of fish-eye images 300 containing target objects as objects to be detected by object recognition as shown in Fig. 12A are prepared as fish-eye images used for database creation. Then, a fish-eye image as shown in Fig. 12C which is one of the prepared fish-eye images 300 used for database creation is rotated so that a target object contained in the fish-eye image is located in the center of any one of the split regions (A) to (H) shown in Fig. 12B.

Then, the fish-eye image shown in Fig. 12C is rotated to create fish-eye images 330 and 340 as shown in Figs. 12D and 12E. The creation of the fish-eye images 330 and 340 is performed so that target objects 321 and 322 contained in the fish-eye image shown in Fig. 12C to be made detectable are located as target objects 331 and 341 in the centers of the split regions (C) and (F), respectively.

Then, the target object 331 located in the center of the split region (C) of the fish-eye image 330 shown in Fig. 13F is extracted as a target object image 350 as shown in Fig. 13G. The target object image 350 is rotated 0 degrees, 90 degrees, 180 degrees and 270 degrees to create target object images 351 to 354 as shown in Fig. 13H. Image data are created from these target object images 351 to 354 as images for corresponding databases so that the image data are used as data for the databases.

Moreover, the fish-eye image 330 shown in Fig. 13F is rotated by 45 degrees to create a fish-eye image 360 as shown in Fig. 13I. The target object 331 in the fish-eye image 330 is moved to the center of the split region (D) so as to be located as a target object 361 in the fish-eye image 360. Alternatively, the fish-eye image 360 may be created in such a manner that an angle of 45 degrees is added to the rotation angle used for creating the fish-eye image 330 shown in Fig. 12D from the fish-eye image 320 shown in Fig. 12C.

Then, the target object 361 located in the center of the split region (D) of the fish-eye image 360 shown in Fig. 13I is extracted as a target object image 370 as shown in Fig. 13J. The target object image 370 is rotated 0 degrees, 90 degrees, 180 degrees and 270 degrees to create target object images 371 to 374 as shown in Fig. 13K. Image data are created from these target object images 371 to 374 as images for corresponding databases so that the image data are used as data for the databases.

According to the aforementioned database creation method, a plurality of data can be created from one database data on a fish-eye image, so that the number of source fish-eye images required for database creation can be reduced.

Although the aforementioned database creation method has been described as a method of creating data for region-specific databases, data creation may be performed in such a manner that target objects are extracted from the fish-eye image 300 shown in Fig. 12A and rotated in accordance with the number of pieces of required data without creation of the fish-eye image 320 shown in Fig. 12C from the fish-eye image containing the target objects if data not for region-specific databases but for a single database are to be created.

Although embodiments of the invention have been described above, the invention is not limited to the aforementioned embodiments of the invention but at least one of the fish-eye lens, the object recognition algorithm, the region splitting method, the database data extraction method, the rotation angle and the number of times of rotation to be used may be changed and modified without departing from the gist of the invention.

## Claims

1. An object recognition method in an object recognition apparatus directly using a fish-eye image (100) taken with a fish-eye camera (210) for recognizing an object contained in the fish-eye image (100), wherein:
the object recognition apparatus includes an object recognition portion (130, 250) which recognizes a detection-target object contained in the fish-eye image (100) from the fish-eye image (100) inputted from the fish-eye camera (210), and region-specific databases (140, 241) which are used for recognition of detection-target objects correspondingly to split regions which are determined in accordance with a direction of distortion of the input fish-eye image (100) so that the input fish-eye image (100) is split (120) into the split regions; and
the object recognition portion (130, 250) detects and recognizes the detection-target object contained in the fish-eye image (100) from the input fish-eye image (100) by using the region-specific databases (140, 241) corresponding to the split regions of the input fish-eye image (100).

2. An object recognition method according to Claim 1, wherein:
the object recognition apparatus further includes an image rotation portion (230) which rotates the input fish-eye image (100);
the image rotation portion (230) rotates the input fish-eye image (100) at intervals of a predetermined angle to thereby create a plurality of fish-eye images (110); and
the object recognition portion (130, 250) performs detection and recognition of the detection-target object for each of the input not-rotated fish-eye image (100) and the plurality of rotated fish-eye images (110) in accordance with each split region.

3. An object recognition method according to Claim 2, wherein:
the object recognition apparatus further includes a detected coordinate transformation portion (150, 260); and
the detected coordinate transformation portion (150, 260) transforms detected coordinates of the object as a result of detection into coordinates in the fish-eye image (100) before rotation in accordance with which of the not-rotated fish-eye image (100) and the plurality of rotated fish-eye images (110) the target object detected and recognized by the object recognition portion (130, 250) is detected from.

4. An object recognition method according to any one of Claims 1 to 3, wherein:
the region-specific databases (140, 241) are created in such a manner that the fish-eye image (100) containing the detection-target object and used for database creation is rotated and data of the detection-target object are extracted from the fish-eye image (100).

5. An object recognition apparatus directly using a fish-eye image (100) taken with a fish-eye camera (210) for recognizing an object contained in the fish-eye image (100), the object recognition apparatus comprising:
an object recognition portion (130, 250) which recognizes a detection-target object contained in the fish-eye image (100) from the fish-eye image (100) inputted from the fish-eye camera (210); and
region-specific databases (140, 241) which are used for recognition of detection-target objects correspondingly to split regions which are determined in accordance with a direction of distortion of the input fish-eye image (100) so that the input fish-eye image (100) is split (120) into the split regions; wherein:
the object recognition portion (130, 250) detects and recognizes the detection-target object contained in the fish-eye image (100) from the input fish-eye image (100) by using the region-specific databases (140, 241) corresponding to the split regions of the input fish-eye image (100).

6. An object recognition apparatus according to Claim 5, further comprising:
an image rotation portion (230) which rotates the input fish-eye image (100); wherein:
the image rotation portion (230) rotates the input fish-eye image (100) at intervals of a predetermined angle to thereby create a plurality of fish-eye images (110); and
the object recognition portion (130, 250) performs detection and recognition of the detection-target object for each of the input not-rotated fish-eye image (100) and the plurality of rotated fish-eye images (110) in accordance with each split region.

7. An object recognition apparatus according to Claim 6, further comprising:
a detected coordinate transformation portion (150, 260); wherein:
the detected coordinate transformation portion (150, 260) transforms detected coordinates of the object as a result of detection into coordinates in the fish-eye image (100) before rotation in accordance with which of the not-rotated fish-eye image (100) and the plurality of rotated fish-eye images (110) the target object detected and recognized by the object recognition portion (130, 250) is detected from.

8. An object recognition apparatus according to any one of Claims 5 to 7, wherein:
the region-specific databases (140, 241) are created in such a manner that the fish-eye image (100) containing the detection-target object and used for database creation is rotated and data of the detection-target object are extracted from the fish-eye image (100).
